# EUROPÄISCHE PATENTANMELDUNG

(11) **EP 3 893 362 A1**
(43) Veröffentlichungstag der Anmeldung: **13.10.2021**
(21) Anmeldenummer: 20168345.5
(22) Anmeldetag: 07.04.2020
(51) Int. Cl.: H02K 3/12, H02K 3/28, H02K 3/50, H02K 15/00, H02K 15/04, H02K 15/06, H02K 1/16, H02K 7/18

(54) **FORMSPULE FÜR EIN WINDENERGIEANLAGENGENERATOR SOWIE DEREN HERSTELLUNG UND WINDENERGIEANLAGE DAMIT**

(71) Anmelder: Wobben Properties GmbH, 26607 Aurich (DE)
(72) Erfinder: Volles, Mats, 26603 Aurich (DE); Willms, Arne, 26409 Wittmund (DE)
(74) Vertreter: Eisenführ Speiser

(57) **Zusammenfassung**

Die Erfindung betrifft eine Formspule (12) für einen Windenergieanlagengenerator. Die Formspule (12) weist eine Wicklung (22) auf, die mit einem elektrischen Leiter (20) gebildet ist. Die Wicklung (22) ist zwischen einem ersten Endabschnitt (26) und einem zweiten Endabschnitt (28) durch mehrere Windungen (24) des Leiters gebildet. Der Leiter weist zumindest im Bereich der Wicklung (22) einen im Wesentlichen rechteckigen Querschnitt mit einer im Wesentlichen konstanten Breite und einer im Wesentlichen konstanten Höhe auf. Der Leiter (20) weist zumindest in einem der Endabschnitte (26) einen Endabschnittbereich (34) auf, in dem der Leiter (20) eine vergleichsweise geringere Breite als im Bereich der Wicklung (22) aufweist.

Ferner betrifft die Erfindung ein Verfahren zum Herstellen einer Formspule (10) sowie einen Windenergieanlagengenerator mit mehreren Formspulen und eine Windenergieanlage (100) mit einem Windenergieanlagengenerator.

## Beschreibung

Die Erfindung betrifft den Bereich von Windenergieanlagen und hierbei insbesondere Windenergieanlagengeneratoren, also Generatoren von Windenergieanlagen, die elektrische Energie erzeugen, um sie in ein Versorgungsnetz einzuspeisen. Generatoren von Windenergieanlagen umfassen einen feststehenden Teil, der als Stator bezeichnet wird und einen sich innerhalb des Stators oder außerhalb des Stators rotierenden Rotor, der auch Läufer genannt wird. Läufer und Stator weisen jeweils eine Wicklung aus elektrischen Leitern auf, um ein elektrisches Erregerfeld zu generieren. Es sind auch Läufer mit Permanentmagneten bekannt, die statt der Wicklung das Erregerfeld erzeugen.

Im Stator ist der Leiter zum Bilden der Wicklung in Nuten des Stators, die sich zwischen Zähnen des Stators erstrecken, eingelegt. Hierbei ist es überwiegend üblich, einen Draht in die Nuten des Stators entsprechend einem gewünschten Aufbau der Wicklung manuell oder maschinell einzuwickeln, um so die Wicklung herzustellen. Zunehmend, um das Wickeln zu beschleunigen, die Fehleranfälligkeit zu reduzieren und einen Füllfaktor der Nuten zu erhöhen, werden so genannte Formspulen, insbesondere im Stator, eingesetzt.

Formspulen bestehen aus einem Leiter, der einen Teil der Wicklung aus mehreren Windungen des Leiters bildet. Der Leiter, mit dem Formspulen gebildet werden, entspricht gegenüber Wicklungen aus Draht aus einem massiven Metallprofil, das einen vergleichsweise größeren Querschnitt aufweist, der vorzugsweise auch rechteckig ist. Die Formspule kann somit in bestimmter Weise maschinell ausgeformt werden und behält ihre Form robust bei, so dass die Formspule nach dem Vorfertigen gelagert, transportiert und erst bei der Montage eines Stators in die Statornuten eingesetzt werden kann.

Um die Wicklung des Stators insgesamt zu bilden, werden dann die Enden mehrerer Formspulen, die aus dem Nutbereich über Wickelköpfe der Spule hinausragen durch Verbindungselemente miteinander verbunden.

Zur Ausnutzung der Vorteile von Formspulen gegenüber Drahtwicklungen ist es wünschenswert, einen Generator, der bereits dimensioniert und bezüglich seiner elektrischen Eigenschaften ausgelegt ist, aber bislang mit einer Wicklung aus Draht versehen wird, unter Beibehaltung der elektrischen Eigenschaften mit Formspulen statt der Drahtwicklung zu versehen. Hierbei tritt die Problematik auf, dass, insbesondere zum Erreichen einer immer höheren Effizienz, mittlerweile die Nuten im Stator breiter als die zwischen den Nuten angeordneten Statorzähne sind. Ein Leiter einer Formspule zur Füllung derartiger Nuten weist demnach eine der Nut entsprechenden Breite auf, um diese möglichst vollständig zu füllen. Soll nun dieser Leiter einer Formspule zur Verbindung der Formspule mit einer weiteren Formspule zwischen Wickelköpfen benachbarter Formspulen herausgeführt werden, so führt die Dichte Anordnung der Formspulen nebeneinander sowie deren Breite dazu, dass dies nicht mehr ohne weiteres möglich ist.

Erste Ansätze wurden verfolgt, bei denen die Enden der Formspulen um 90° um ihre Längsachse in sich gedreht wurden. Diese 90°-Drehung ist jedoch sehr aufwendig und stellt einen vergleichsweise großen Anteil des Herstellungsaufwands einer Formspule dar, so dass gerade die Vorteile, die durch die Verwendung von Formspulen bezüglich des Aufwands eingespart werden, durch diese Drehung wieder verloren gehen. Im Übrigen eignet sich diese 90°-Drehung nur in dem Fall, dass der Leiter eine geringere Höhe im Vergleich zur Breite des Leiters aufweist. Dadurch wird die Geometrie der Formspule demnach eingeschränkt, wenn auf diesen Ansatz zurückgegriffen wird.

Aufgabe der vorliegenden Erfindung ist es demnach eine Formspule für einen Generatorstator eines Windenergieanlagengenerators zu finden, die derart ausgebildet ist, dass sie in einen Stator eingesetzt werden kann, der Statorzähne aufweist, die eine geringere Breite als die der Nuten aufweist. Insbesondere soll sich durch die Ausbildung der Formspule möglichst keine Einschränkungen bezüglich der elektrischen Eigenschaften der Spule ergeben. Zumindest soll eine Alternative zum Stand der Technik gefunden werden.

Hierzu betrifft die Erfindung eine Formspule nach Anspruch 1. Die Erfindung betrifft eine Formspule für einen Windenergieanlagengenerator.

Die Formspule weist eine Wicklung auf, die durch einen elektrischen Leiter gebildet ist. Die Wicklung ist durch mehrere Windungen des elektrischen Leiters zwischen einem ersten Endabschnitt und einem zweiten Endabschnitt des Leiters gebildet. Zumindest im Bereich der Wicklung weist der Leiter einen im Wesentlichen rechteckigen Querschnitt mit einer im Wesentlichen konstanten Breite und einer im Wesentlichen konstanten Höhe auf. Im Wesentlichen bedeutet hier, dass geringe Höhen- und Breitenunterschiede aufgrund der Verformung des elektrischen Leiters im Bereich von unter 5 % oder unter 2 % möglich sind. Die Wicklung der Formspule ist zu unterschieden von einer Wicklung des Stators. Die Wicklung des Stators bezeichnet die Gesamtheit der Wicklungen der Formspulen, die in einem Stator miteinander verschaltet werden.

Zumindest in einem der Endabschnitte weist der Leiter der Formspule gemäß der Erfindung in einem Endabschnittbereich des Endabschnitts eine vergleichsweise geringere Breite als im Bereich der Wicklung der Formspule auf. Der Leiter lässt sich durch diesen Endabschnittbereich, der vorzugsweise auf Höhe eines Wickelkopfabschnitts der Formspule angeordnet ist, am Wickelkopf der Formspule und auch an einem Wickelkopf einer benachbarten Formspule durch den durch die Wickelköpfe gebildeten Zwischenraum ohne Kontakt mit den Wickelköpfen selbst hindurchführen.

Eine reduzierte Breite des Leiters im Endabschnittbereich ermöglicht so die Ausbildung eines Windenergieanlagengenerators in der Weise, dass der Stator, in den die Formspulen einzusetzen sind, eine größere Nutbreite der Nuten als Zahnbreite der Statorzähne aufweisen kann. Gleichzeitig können die hierfür verwendenden Formspulen mit geringem Aufwand hergestellt werden. Die geringere Breite im Endabschnittbereich ist nämlich beispielsweise durch einfaches Pressen herstellbar. Dank der erfindungsgemäßen Formspule können somit, insbesondere im Hinblick auf ihre Gesamtabmessungen und Leistung, bereits dimensionierte Windenergieanlagengeneratoren, die zuvor mit Drahtwicklungen ausgestattet wurden, nun mit Formspulen ausgestattet werden.

Gemäß einer ersten Ausführungsform der Erfindung umfasst die Formspule im Endabschnittbereich, in dem der Leiter eine vergleichsweise geringere Breite als im Bereich der Wicklungen aufweist, zusätzlich eine größere Höhe als im Bereich der Wicklung. Hierdurch wird sichergestellt, dass die Querschnittsfläche des Leiters im Endabschnittbereich gleich oder nur geringfügig kleiner als im Bereich der Wicklung ist. Dies bewirkt, dass ein elektrischer Widerstand im Endabschnittbereich durch eine verringerte Breite aufgrund einer vergrößerte Höhe nur geringfügig oder im Wesentlichen gar nicht gegenüber dem Widerstand im Bereich der Wicklung erhöht wird.

Gemäß einerweiteren Ausführungsform besteht der Leiter der Formspule im Wesentlichen aus Aluminium und weist vorzugsweise einen Aluminiumanteil von mehr als 99 % auf.

Die Breite eines Leiters einer Formspule aus Aluminium kann besonders einfach im Endabschnittbereich durch Pressen reduziert werden. Insbesondere ist bei einem derartig aus Aluminium ausgebildeten Leiter auch die Gefahr von Rissentwicklung des Materials bei einem Umformprozess, beispielsweise einem Pressen, gering.

Gemäß einer weiteren Ausführungsform weist der Endabschnittbereich eine Länge von weniger als 12 cm, von weniger als 10 cm, vorzugsweise weniger als 7 cm, auf. Besonders bevorzugt ist der Endabschnittbereich beabstandet zu einem Ende der Formspule, insbesondere mit einem Abstand von mehr als 2 cm oder mehr als 5 cm, beabstandet.

Durch die begrenzte Ausdehnung des Endabschnittsbereichs sowie der Beabstandung vom Ende des Leiters der Formspule im Endabschnitt wird erreicht, dass beim Umformen des Endabschnittbereichs, um die geringere Breite zu erhalten, das Ende des Leiters selbst im Wesentlichen unbeeinflusst bleibt. Dies dient, um die Formspule mit einem Verbindungsteil, das auf den Querschnitt des Leiters im unumgeformten Zustand angepasst ist, ohne weitere Maßnahmen weiter mit der Formspule verbinden zu können.

Gemäß einer weiteren Ausführungsform umfasst die Breite des Leiters im Endabschnittbereich oder zumindest einem mittleren Abschnitt des Endabschnittbereichs höchstens 90 % und mindestens 75 % oder mindestens 60 % der Breite des Leiters im Bereich der Wicklung. Eine Reduzierung der Breite des Leiters auf 60 - 90 % oder etwa 75 - 90 % im Endabschnittbereich ermöglicht einerseits eine Reduzierung der Breite, die eine dicht benachbarte Anordnung der Formspulen gewährleistet, wobei andererseits die Breite nicht zu stark, insbesondere durch Pressen, reduziert wird, so dass die Gefahr von Rissen im Material, insbesondere Aluminium, verhindert oder dieser Gefahr zumindest entgegengewirkt wird.

Gemäß einer weiteren Ausführungsform umfasst der elektrische Leiter mehrere elektrische Teilleiter, die entlang der Höhe und/oder Breite des Leiters übereinander und/oder nebeneinander gestapelt sind. Eine Umformung, insbesondere durch Pressen, also Kraftausübung auf den Leiter zur Reduzierung der Breite im Endabschnittbereich, ermöglicht so eine Ausbreitung der einzelnen Teilleiter entlang ihrer jeweiligen Höhe und/oder Breite. Hierbei können sich die Teilleiter voneinander abstoßen und sich aus ihrer relativen Position zueinander verschieben. Der Gefahr von Rissbildung in einem vergleichsweise massiven Leiter wird somit entgegengewirkt.

Gemäß einer weiteren Ausführungsform weisen zumindest die außenliegenden Teilleiter im Endabschnittbereich oder zumindest dem mittleren Abschnitt des Endabschnittbereichs abgerundete Außenkanten auf. Hierdurch wird eine Stromführung entlang stetiger Kanten, nämlich der runden Kanten ermöglicht, so dass die Gefahr einer Feldstärkeüberhöhung reduziert und damit eine Teilentladung des Leiters verhindert oder zumindest vermindert wird.

Gemäß einer weiteren Ausführungsform weist der Endabschnittbereich einen mittleren Abschnitt und zwei Seitenabschnitte auf. Im mittleren Abschnitt weist der Leiter eine im Wesentlichen konstante Breite auf, wobei die Breite in den Seitenbereichen des Endabschnittbereichs zum mittleren Abschnitt hin, insbesondere stetig, abnimmt. Auch durch diese Ausbildung ist eine Reduzierung unstetiger Verlaufsrichtungen des Stroms möglich, um eine Feldstärkeüberhöhung zu reduzieren und damit eine Teilentladung des Leiters zu verhindern oder zumindest zu vermindern. Gemäß einer weiteren Ausführungsform entspricht die Kontur zumindest einer Seite oder zweier gegenüberliegender Seiten des Leiters in den Seitenbereichen der Endabschnittbereiche im Wesentlichen einer Kreisbahn mit einem Radius von 10 mm oder mehr. Dieser Verlauf der Kontur hat sich durch Versuche besonders vorteilhaft zur Reduzierung eine Feldstärkeüberhöhung und damit zur Vermeidung oder zumindest Verminderung einer Teilentladung des Leiters herausgestellt.

Weiterhin betrifft die Erfindung ein Verfahren zum Herstellen einer Formspule, vorzugsweise nach einer der vorgenannten Ausführungsformen. Gemäß dem Verfahren wird zunächst ein Leiter bereitgestellt. Der Leiter wird in mehreren Windungen zum Bilden einer Wicklung gewickelt. Daraufhin wird ein Endabschnittbereich in einem Endabschnitt des Leiters gepresst oder umgeformt. Nach dem Pressen oder Umformen wird der Leiter im Endabschnittbereich vorzugsweise isoliert.

Die Schritte Wickeln des Leiters und Pressen des Endabschnittbereichs erfolgen gemäß einer alternativen Ausführungsform in umgekehrter Reihenfolge. Nach dem Bereitstellen des Leiters wird demnach zuerst ein Endabschnittbereich eines Endabschnitts des Leiters gepresst und daraufhin der Leiter in mehreren Windungen zum Bilden einer Wicklung gewickelt. Vorzugsweise wird der Leiter vor dem Bereitstellen bereits isoliert. Die Isolierung entspricht vorzugsweise einer Lackschicht, die bevorzugt auf den Aluminiumleiter aufgebracht ist. Das Isolieren nach dem Pressen oder Umformen kann dann auch als Neuisolieren bezeichnet werden, wobei dieses Isolieren oder Neuisolieren dann vorzugsweise durch Umwickeln oder Bandagieren des Leiters mit einem Isolationsband, beispielsweise einem glimmerhaltigen Band, erfolgt.

Gemäß einer Ausführungsform wird der Endabschnitt zumindest teilweise, insbesondere zumindest das Ende des Leiters, vor dem Pressen von vier Seiten eingespannt. Das Ende behält hierdurch seine Form und ist mit Verbindungsteilen zum Verbinden mehrerer Formspulen, die üblicherweise auf die Form des Leiters vor dem Pressen angepasst sind, in einfacher Weise verbindbar.

Gemäß einer weiteren Ausführungsform umfasst das Pressen mindestens zwei Teilpressschritte zwischen denen der Leiter erwärmt oder erhitzt wird. Hierdurch wird Spannungen im Leiter, die durch das Pressen entstehen, entgegengewirkt.

Weiterhin betrifft die Erfindung einen Windenergieanlagengenerator, der mehrere Formspulen nach einer der vorgenannten Ausführungsformen aufweist, die vorzugsweise durch ein Verfahren nach einer der vorgenannten Ausführungsformen hergestellt ist.

Gemäß einer Ausführungsform des Windenergieanlagengenerators weist dieser einen Stator, nämlich einen Generatorstator, auf, der umlaufend abwechselnd Nuten und Zähne aufweist. Die Nutbreite der Nuten ist jeweils breiter als die Zahnbreite der Zähne des Stators.

Weiterhin betrifft die Erfindung eine Windenergieanlage mit einem Windenergieanlagengenerator nach einem der vorgenannten Ausführungsformen.

Weitere Ausführungsformen ergeben sich anhand der in den Figuren dargestellten Ausführungsbeispielen. Hierbei zeigen:
- Figur 1: eine Windenergieanlage,
- Figur 2: eine exemplarische Anordnung vom Formspulen in einem Generatorstator einer Windenergieanlage gemäß dem Stand der Technik,
- Figur 3: ein Ausführungsbeispiel einer Formspule,
- Figur 4: einen Endabschnitt eines Leiters, der zumindest an zwei Seiten eingespannt ist und an dem Pressbacken anliegen,
- Figur 5: eine weitere Ansicht einer Formspule, an der Pressbacken anliegen,
- Figur 6: einen Endabschnitt nach dem Pressen in der Draufsicht,
- Figur 7: eine perspektivische Ansicht eines Endabschnitts nach dem Pressen,
- Figur 8: eine weitere Ansicht eines Endabschnitts, bei dem das Ende von vier Seiten eingespannt ist und
- Figur 9: die Schritte zum Herstellen einer Formspule gemäß einem Ausführungsbeispiel des erfindungsgemäßen Verfahrens.

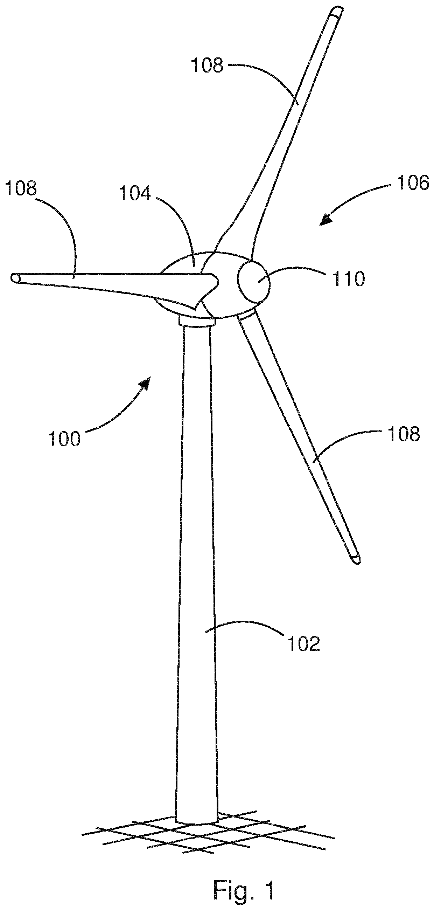

Figur 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Windenergieanlagengenerators, welcher direkt oder indirekt mit dem aerodynamischen Rotor 106 gekoppelt ist. Der elektrische Windenergieanlagengenerator ist in der Gondel 104 angeordnet und erzeugt elektrische Energie. Die Pitchwinkel der Rotorblätter 108 können durch Pitchmotoren an den Rotorblattwurzeln der jeweiligen Rotorblätter 108 verändert werden.

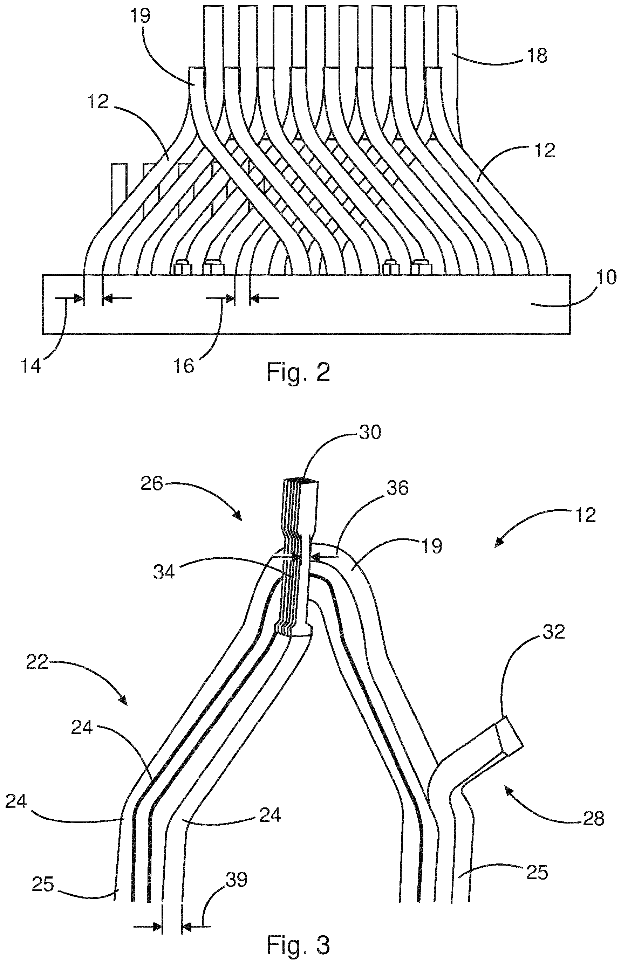

Figur 2 zeigt einen Ausschnitt eines Windenergieanlagengenerators und hierbei insbesondere einen Stator 10, in dem mehrere Formspulen 12 angeordnet sind. Die Formspulen 12 weisen eine Breite 14 auf, die gleich oder geringfügig kleiner ist als ein Abstand 16 der Formspulen, mit dem die einzelnen Formspulen 12 zueinander in Nuten des Stators eingelegt sind. Hierdurch lassen sich die Endabschnitte 18 der Formspulen zwischen benachbarten Formspulen, insbesondere deren Wickelköpfe 19, hindurchführen. Wird nun der Abstand 16 zwischen den Formspulen 12 verringert oder die Breite 14 der Formspulen 12 vergrößert, so ist dieses Hindurchführen der Endabschnitte 18 nur dann noch möglich, wenn die Endabschnitte 18 um 90° gebogen werden. Dieses Biegen ist sehr zeitaufwendig und stellt einen Arbeitsschritt dar, bei dem die Formspule 12 außerdem beschädigt werden kann.

Figur 3 zeigt daher eine erfindungsgemäße Formspule 12, die einen Leiter 20 aufweist, der im Bereich einer Wicklung 22 mehrere Windungen 24 umfasst. Die Windungen 24 bilden Schenkel 25 der Formspule 12, die über Wickelköpfe 19 verbunden sind. Weiter weist die Formspule 12 einen ersten Endabschnitt 26 sowie einen zweiten Endabschnitt 28 auf. Der erste Endabschnitt 26 bildet hierbei das erste Ende 30 der Formspule und der zweite Endabschnitt 28 weist das zweite Ende 32 der Formspule auf. Die Enden 30, 32 dienen zum Verbinden der Formspule 12 mit weiteren Formspulen 12. Erfindungsgemäß ist im ersten Endabschnitt 26 ein Endabschnittbereich 34 vorgesehen, in dem der Leiter 20 eine Breite 36 aufweist, die geringer als die Breite 39 im Bereich der Wicklung 22 ist.

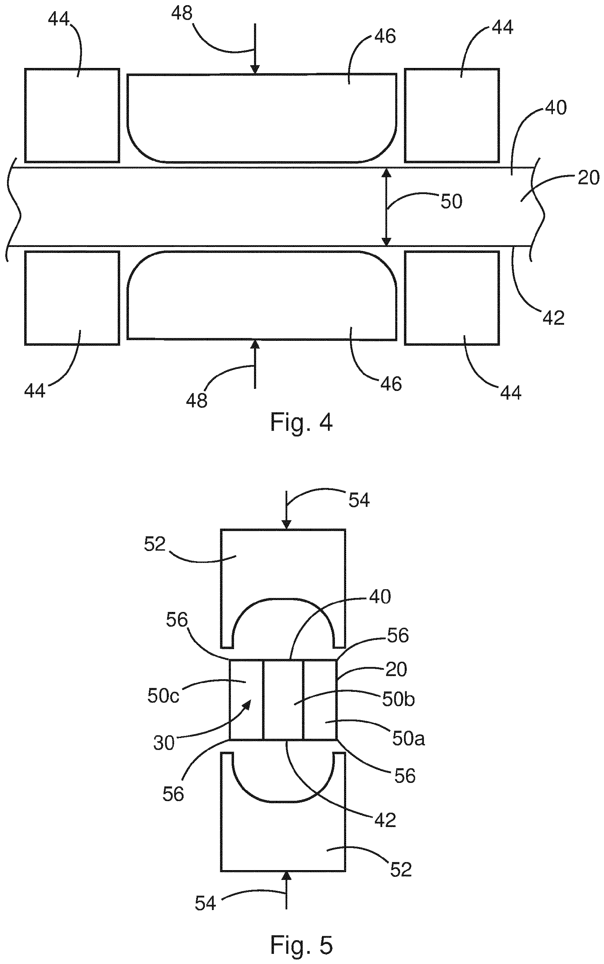

Zum Herstellen des Endabschnittbereichs 34, wie er in Figur 3 dargestellt ist, wird der Leiter 20, wie in Figur 4 dargestellt, von zwei Seiten 40, 42 durch Spannbacken 44 eingespannt. Zwei Pressbacken 46 pressen dann mit einer Kraft 48 auf die Seiten 40, 42, um so eine Breite 50 des Leiters 20 im Bereich der Pressbacken 46 zu reduzieren.

Figur 5 zeigt eine Ansicht des Leiters 20 in Längsrichtung auf das Ende 30 des Leiters 20, wobei erkennbar ist, dass der Leiter 20 aus mehreren Einzelleitern 50a, 50b, 50c gebildet ist. Zudem sind weitere Pressbacken 52 dargestellt, die durch eine Kraft 54 neben dem Reduzieren der Breite des Leiters zusätzlich die Kanten 56 des Leiters 20 beim Pressen abrunden.

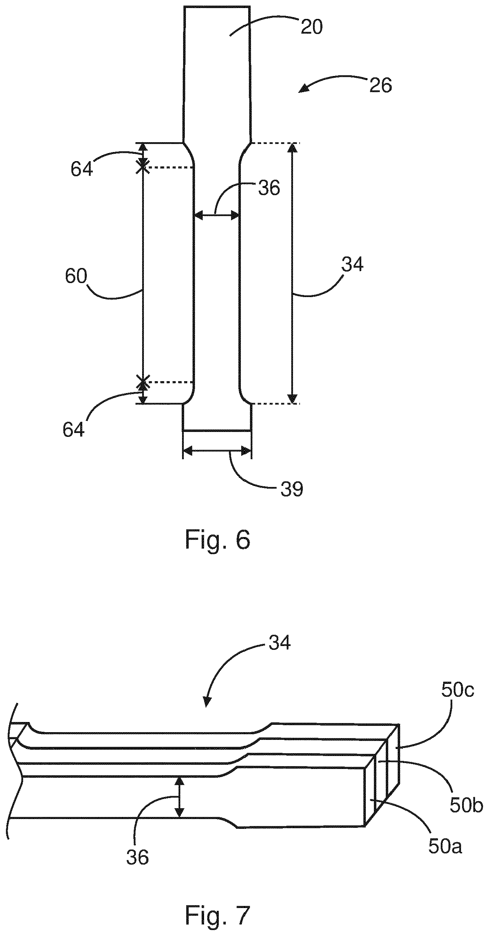

Figur 6 zeigt einen Endabschnitt 26 eines elektrischen Leiters 20 nach dem Pressen. Es ist erkennbar, dass der Leiter 20 im Endabschnittbereich 34 einen mittleren Abschnitt 60 aufweist, in dem die Breite 36 im Wesentlichen konstant ist. In Seitenabschnitten 64 nimmt die Breite 36 von der maximalen Breite 39, die der Leiter auch im Bereich der Wicklung 22 aufweist, kontinuierlich bis zur Breite 36, die der Leiter 20 im Bereich des mittleren Abschnitts 60 aufweist, ab.

Figur 7 zeigt eine perspektivische Ansicht des Leiters 20, bei dem einerseits der Endabschnittbereich 34 mit einer reduzierten Breite 36 erkennbar ist und andererseits die Einzelleiter 50a, 50b, 50c dargestellt sind.

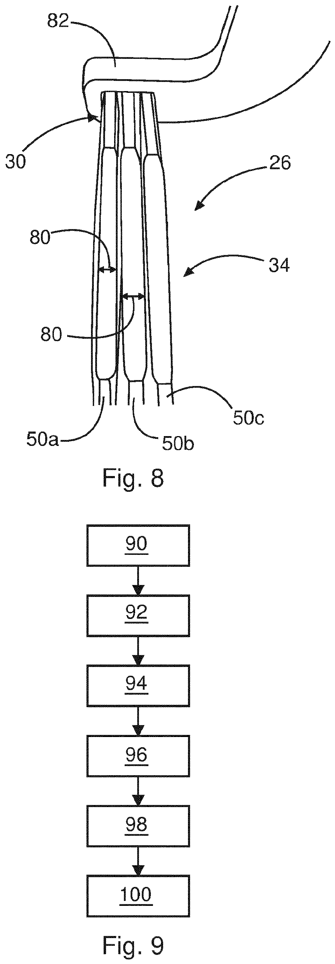

Figur 8 zeigt eine weitere Darstellung des Endabschnitts 26, wobei erkennbar ist, dass die Einzelleiter 50a bis 50c durch das Pressen des Leiters 20 im Endabschnittbereich 34 ebenfalls unterschiedliche Höhen 80 im Vergleich zum ersten Ende 30 aufweisen. Vor dem Pressen wurde der Leiter 20 hierzu durch eine Halterung 82 mit einem rechteckigen Loch von vier Seiten eingelegt.

Figur 9 zeigt die Schritte zum Herstellen einer Formspule, wobei in einem Schritt 90 ein Leiter bereitgestellt wird. In einem Schritt 92 wird der Leiter in mehreren Windungen zum Bilden einer Wicklung gewickelt. Im Schritt 94 wird der Leiter von vier Seiten mit seinem ersten Ende eingespannt und im Schritt 96 von zwei Seiten durch Spannbacken eingespannt. Im Schritt 98 wird der Leiter dann im Endabschnittbereich gepresst und im Schritt 100 wird der Leiter isoliert.

## Patentansprüche

1. Formspule (12) für einen Windenergieanlagengenerator, wobei die Formspule (12) eine Wicklung (22) aufweist, die mit einem elektrischen Leiter (20) gebildet ist, wobei die Wicklung (22) zwischen einem ersten Endabschnitt (26) und einem zweiten Endabschnitt (28) durch mehrere Windungen (24) des Leiters gebildet ist, wobei der Leiter zumindest im Bereich der Wicklung (22) einen im Wesentlichen rechteckigen Querschnitt mit einer im Wesentlichen konstanten Breite und einer im Wesentlichen konstanten Höhe aufweist und der Leiter (20) zumindest in einem der Endabschnitte (26) einen Endabschnittbereich (34) aufweist, in dem der Leiter (20) eine vergleichsweise geringere Breite (36) als im Bereich der Wicklung (22) aufweist.

2. Formspule nach Anspruch 1, wobei der Leiter (20) in dem Endabschnittbereich (34) zusätzlich eine größere Höhe (80) als im Bereich der Wicklung (22) aufweist.

3. Formspule nach Anspruch 1 oder 2, wobei der Leiter (20) im Wesentlichen aus Aluminium besteht, also einen Aluminiumanteil von mehr als 99 % aufweist.

4. Formspule nach einem der vorhergehenden Ansprüche, wobei der Endabschnittbereich (34) eine Länge von weniger als 12 cm oder weniger als 10 cm, vorzugsweise weniger als 7 cm, aufweist.

5. Formspule nach einem der vorhergehenden Ansprüche, wobei die Breite in dem Endabschnittbereich (34) oder zumindest einem mittleren Abschnitt (60) des Endabschnittbereichs (34) höchstens 90 % und mindestens 75 % oder mindestens 60 % der Breite aufweist, die der Leiter (20) im Bereich der Wicklung (22) aufweist.

6. Formspule nach einem der vorhergehenden Ansprüche, wobei der Leiter (20) mehrere im Wesentlichen, zumindest im Bereich der Wicklung (22), rechteckige Teilleiter (50a, 50b, 50c) umfasst, die entlang der Höhe (80) des Leiters (20) übereinandergestapelt und/oder entlang einer Breite des Leiters nebeneinandergestapelt sind.

7. Formspule nach Anspruch 6, wobei im Endabschnittbereich (34) oder zumindest dem mittleren Abschnitt (60) des Endabschnittbereichs (34) die außenliegenden Teilleiter (50a, 50c) abgerundete Außenkanten aufweisen.

8. Formspule nach einem der vorhergehenden Ansprüche, wobei der Endabschnittbereich (34) den mittleren Abschnitt (60) und zwei Seitenabschnitte (64) aufweist und der mittlere Abschnitt (60) eine im Wesentlichen konstante Breite aufweist und die Breite in den Seitenbereichen (64) zum mittleren Abschnitt (60) hin, insbesondere stetig, abnimmt.

9. Formspule nach Anspruch 8, wobei eine Kontur zumindest einer Seite in den Seitenabschnitten im Wesentlichen einer Kreisbahn mit einem Radius von 5 mm, mindestens 5 mm, 10 mm oder mehr als 10 mm folgt.

10. Verfahren zum Herstellen einer Formspule (10) nach einem der vorhergehenden Ansprüche, umfassend die Schritte:
- Bereitstellen (90) eines Leiters (20),
- Wickeln (92) des Leiters (20) in mehreren Windungen (24) zum Bilden einer Wicklung (22),
- Pressen (98) eines Endabschnittbereichs (34) in einem Endabschnitt (26) der Formspule (12) und
- Isolieren (100) des Leiters (20).

11. Verfahren nach Anspruch 10, wobei der Endabschnitt (26) zumindest teilweise, insbesondere zumindest das Ende (30) des Leiters (20) vor dem Pressen von vier Seiten eingespannt (94) wird.

12. Verfahren nach Anspruch 10 oder 11, wobei das Pressen (98) mindestens zwei Teilpressschritte umfasst, wobei zwischen den zwei Teilpressschritten der Leiter (20) zumindest im Endabschnitt (26) erwärmt wird.

13. Windenergieanlagengenerator mit mehreren Formspulen (12) nach einem der Ansprüche 1 bis 9, insbesondere hergestellt durch ein Verfahren nach einem der Ansprüche 10 bis 12.

14. Windenergieanlagengenerator nach Anspruch 13, wobei der Windenergieanlagengenerator einen Stator (10) aufweist, der umlaufend abwechselnd Nuten und Zähne aufweist, wobei die Nutbreite der Nuten jeweils breiter als die Zahnbreite der Zähne des Stators (10) ist.

15. Windenergieanlage (100) mit einem Windenergieanlagengenerator nach Anspruch 13 oder 14.
